# EUROPEAN PATENT SPECIFICATION

(11) **EP 1 798 844 B1**
(45) Date of publication and mention of the grant of the patent: **08.06.2011**
(21) Application number: 06001772.0
(22) Date of filing: 27.01.2006
(51) Int. Cl.: H02K 21/46, H02K 3/16, H02P 1/50, H02K 19/08

(54) **Self magnetizing motor**
Selbstmagnetisierender Motor
Moteur à automagnétisation

(30) Priority: 14.12.2005 KR 2005123426
(43) Date of publication of application: 20.06.2007
(73) Proprietor: LG Electronics Inc., Yongdungpo-gu Seoul (KR)
(72) Inventor: Shim, Jang-Ho, Yangcheon-Gu Seoul (KR); Lee, Sung-Ho, Dongan-Gu Anyang Gyeonggi-Do (KR); Kim, Jae-Min, Dongjak-Gu Seoul (KR); Choi, Jae-Hak, Seodaemun-Gu Seoul (KR); Park, Jin-Soo, Namdong-Gu Incheon (KR)
(74) Representative: Vossius & Partner

(56) References cited:
- EP-A1- 0 189 652
- WO-A-99/43077
- GB-A- 2 026 253
- US-A1- 3 891 879

## Description

The present invention relates to a self magnetizing motor and a method for winding coils on a stator thereof, and particularly, to a self magnetizing motor which is operated by an induced electromotive force generated by a main coil, a sub coil and a conductive bar of a rotor from its initial driving to a speed prior to a synchronous speed, and operated by a magnetomotive force generated by an exciter pole and an exciter magnetizable portion at the synchronous speed, and a method for wining coils on a stator thereof.

In general, a motor is a device for converting electrical energy into kinetic energy, which may be divided into a direct current (DC) motor and a alternating current (AC) motor according to power to be used.

The AC motor may include an induction motor, a synchronous motor and a commutator motor. The induction motor may be classified into a single-phase induction motor and a three-phase induction motor.

The single-phase induction motor generally has a simple and firm structure, and is relatively easy to obtain a single-phase power which is widely used as a driving power of electric devices for domestic, office, industry and architecture.

The single-phase induction motor is not initiated by itself and thus the main coil and also a sub coil having a phase of current which goes 90° ahead as compared to the phase of the current applied to the main coil are provided therefor, in order to generate an starting torque. The main and sub coils are wound in induction slots using a particular winding method.

In the related art sing-phase induction motor, when an AC power is applied to the main coil and the sub coil wound in the induction slots at an initial driving of the single-phase induction motor, a rotating magnetic field of a stator is generated. At this time, an induced current is applied to a conductive bar of a rotor, and the rotor then starts to rotate. Here, the rotor rotates with being slipped. At this time, the current applied to the sub coil is shielded by a current cut-off device, and the current may only be applied to the main coil.

However, in the related art single-phase induction motor, because the rotor is rotated by an induction operation, the rotor may be slipped and thus an efficiency of the motor may be decreased.

Related technology is described in WO 99/43077 and GB-A-2 026 253.

An object of the present invention is to provide a self magnetizing motor capable of improving an efficiency of a motor, a power factor, and a synchronization characteristic by forming exciter poles facing each other at an inner circumferential surface of a stator to rotate a rotor with a synchronous speed of a magnetic field of the stator, and by disposing an exciter magnetizable portion at an outer circumferential surface of the rotor to thus be selectively magnetized by the exciter poles.

To achieve these and other advantages and in accordance with the purpose of the present invention, as embodied and broadly described herein, there is provided a self magnetizing motor as specified in the claims.

The exciter poles are positioned to face each other on the basis of the center portion of the stator, and the exciter coils wound in each exciter slot are wound thereon in opposite directions to each other.

Preferably, the sub coil is wound in each stator slot adjacent to each exciter slot among the plurality of stator slots by being overlapped thereon.

The main coil is inserted into a first (1^{st}) stator slot, and wound sequentially via a 12^{th} stator slot, a 2^{nd} stator slot, a 11^{th} stator slot, a 3^{rd} stator slot, a 10^{th} stator slot, a 4^{th} stator slot, a 9^{th} stator slot, a 24^{th} stator slot, a 13^{th} stator slot, a 23^{rd} stator slot, a 14^{th} stator slot, a 22^{nd} stator slot, a 15^{th} stator slot, a 21^{st} stator slot, and a 16^{th} stator slot, to be then drawn out.

The sub coil is inserted into a 5^{th} stator slot, and wound sequentially via a 20^{th} stator slot, the 5^{th} stator slot, the 20^{th} stator slot, a 4^{th} stator slot, a 21^{st} stator slot, a 3^{rd} stator slot, a 22^{nd} stator slot, a 8^{th} stator slot, a 17^{th} stator slot, the 8^{th} stator slot, the 17^{th} stator slot, a 9^{th} stator slot, a 16^{th} stator slot, a 10^{th} stator slot, and a 15^{th} stator slot, to be then drawn out.

A thickness between the outer circumferential surface of the stator and an exciter slot is relatively greater than a thickness between the outer circumferential surface of the stator and a stator slot.

Preferably, a part (i.e., referred to as pole shoe) of an end portion of each teeth adjacent to each exciter slot among the plurality of teeths is removed therefrom.

A taper portion is preferably formed at an end portion of the exciter pole.

The foregoing and other objects, features, aspects and advantages of the present invention will become more apparent from the following detailed description of the present invention when taken in conjunction with the accompanying drawings.

The accompanying drawings, which are included to provide a further understanding of the invention and are incorporated in and constitute a part of this specification, illustrate embodiments of the invention and together with the description serve to explain the principles of the invention.

In the drawings:
Fig. 1 is a disassembled perspective view showing an exemplary self magnetizing motor according to the present invention;
Fig. 2 is a horizontal sectional view showing the self magnetizing motor according to the present invention;
Fig. 3 is a view showing main coils in Fig. 2;
Fig. 4 is a view showing sub coils in Fig. 2;
Fig. 5 is a enlarged view showing main parts of Fig. 2;
Fig. 6 is a plane view showing a winding structure of a stator in the self magnetizing motor according to the present invention;
Fig. 7 is an extended view showing a method for winding coils on a stator of the self magnetizing motor according to the present invention, in which a method for winding main coils on the stator is described; and
Fig. 8 is an extended view showing a method for winding coils on a stator of the self magnetizing motor according to the present invention, in which a method for winding sub coils on the stator is described.

Reference will now be made in detail to the preferred embodiments of the present invention, examples of which are illustrated in the accompanying drawings.

Hereinafter, a self magnetizing motor and a method for winding coils on a stator thereof according to the present invention will now be explained in detail with reference to the accompanying drawings.

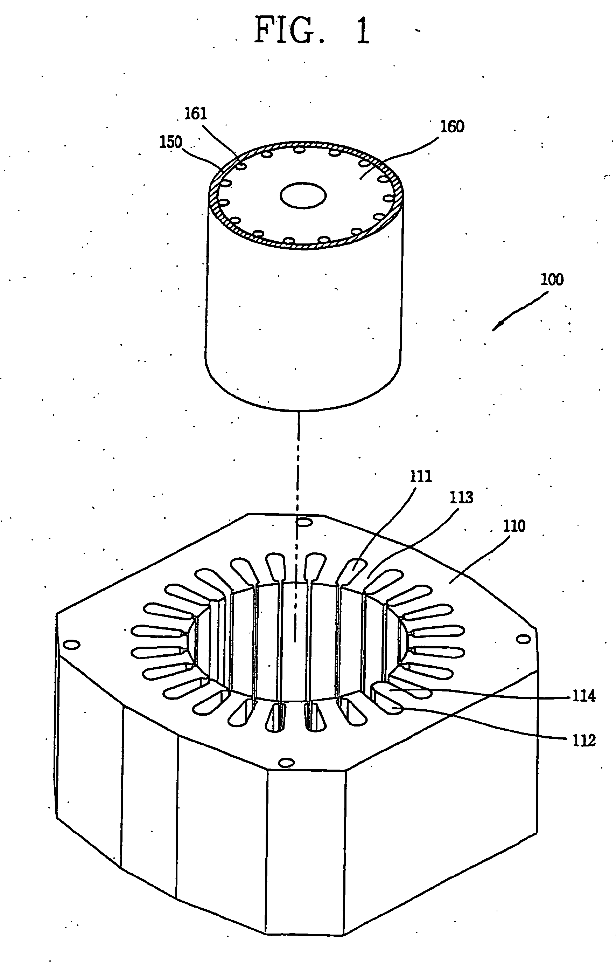

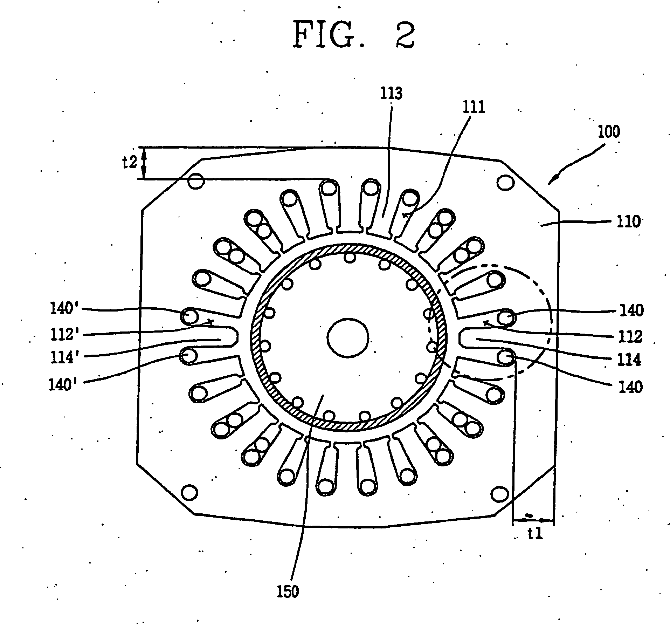

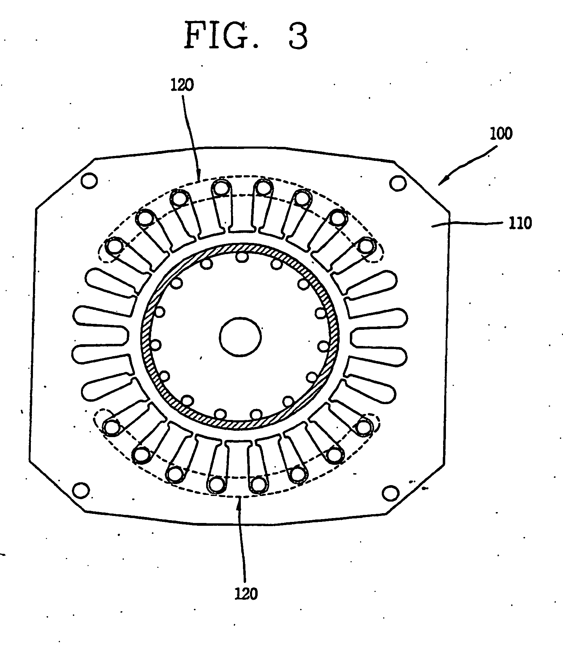

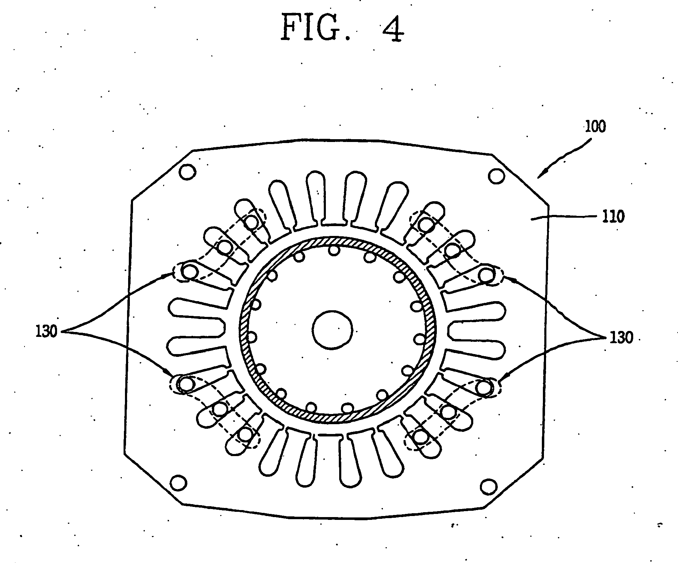

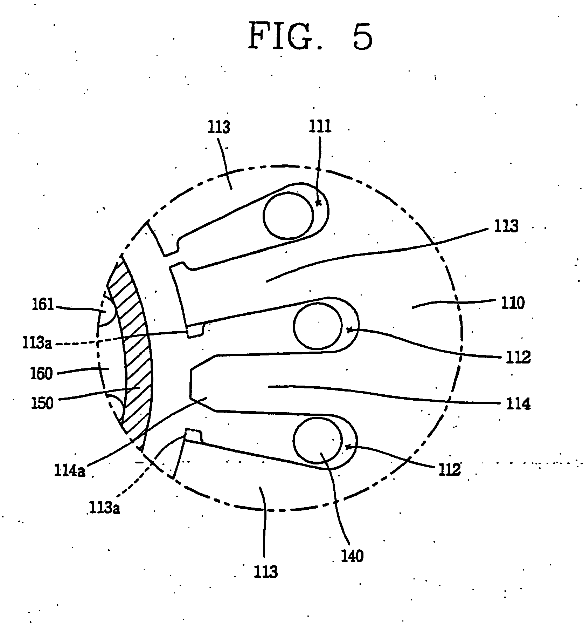

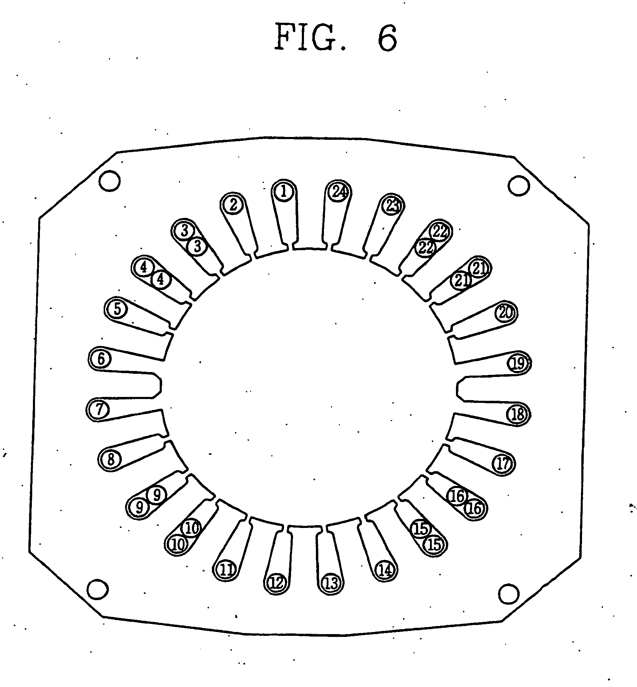

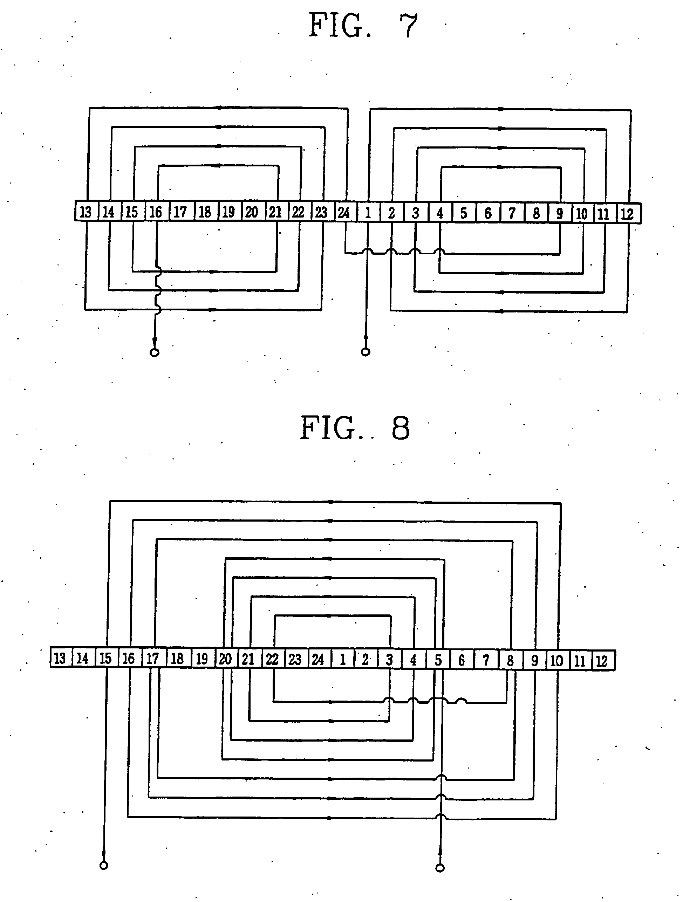

Fig. 1 is a disassembled perspective view showing an exemplary self magnetizing motor according to the present invention, Fig. 2 is a longitudinal sectional view showing the self magnetizing motor according to the present invention, Fig. 3 is a view showing main coils in Fig. 2, Fig. 4 is a view showing sub coils in Fig. 2, Fig. 5 is a enlarged view showing main parts of Fig. 2, Fig. 6 is a plane view showing a winding structure of a stator in the self magnetizing motor according to the present invention, Fig. 7 is an extended view showing a method for winding coils on a stator of the self magnetizing motor according to the present invention, in which a method for winding main coils on the stator is described, and Fig. 8 is an extended view showing a method for winding coils on a stator of the self magnetizing motor according to the present invention, in which a method for winding sub coils on the stator is described.

A self magnetizing motor 100 according to the present invention has a structure in which an exciter magnetizable portion 150 is disposed at an outer circumferential surface of a rotor 160, and two exciter poles 114 are disposed to face each other at an inner circumferential surface of the stator 110 to thus selectively magnetize the exciter magnetizable portion 150, whereby the self magnetizing motor 100 is operated by an induced electromotive force generated by a main coil 120, a sub coil 130 and a conductive bar 161 of the rotor 160 from its initial driving to a speed prior to a synchronous speed, and operated by a magnetomotive force generated by the exciter poles 114 and the exciter magnetizable portion 150 at the synchronous speed. Here, the self magnetizing motor 100 which, for example, has a structure of single-phase, two poles and 24 stator slots 111 will be explained.

As shown in Figs. 1 through 6, the self magnetizing motor 100 may include: a stator 110 formed as a plurality of sheets are stacked together, and provided with a plurality of stator slots 111 and a plurality of exciter slots 112 and 112' positioned at an inner circumferential surface of the stator 110 with a constant interval therebetween, teeth 113 respectively positioned between each stator slot 111, and exciter poles 114 and 114' respectively positioned between each exciter slot 112 and 112'; a main coil 120 wound in each stator slot 111; a sub coil 130 having a current phase going 90° ahead as compared to that of the main coil 120 and wound in each stator coil; exciter coils 140 wound in the exciter slots 112 and 112'; and a rotor 160 rotatably inserted into a center portion of the stator 110 to thus be magnetized by the exciter coils 140 and having an exciter magnetizable portion 150 disposed at an outer circumferential surface thereof.

Each exciter pole 114 and 114', each exciter slot 112 and 112' and each exciter coil 140 and 140' are constructed in pair and positioned to face each other, respectively, on the basis of the center portion of the stator 110. At this time, the exciter coil 140 wound in the exciter slot 112 and the exciter coil 140' wound in the exciter slot 112' are wound thereon in opposite directions to each other. For example, if the exciter coil 140 is wound in the exciter slot 112 in a clockwise direction, the exciter coil 140' is wound in the exciter slot 112' in an anti-clockwise direction.

The exciter magnetizable portion 150 is formed of a material which can be selectively magnetized by a current flowing on the exciter coils 140 and 140' wound in the exciter slots 112 and 112', namely, a magnetizable or demagnetizable material.

Here, the exciter magnetizable portion 150 may be constructed as a body separate from the rotor 160 to be mounted at the outer circumferential surface of the rotor 160. At this time, the exciter magnetizable portion 150 may preferably be formed as a cylindrical structure.

Although not shown in the drawings, the exciter magnetizable portion 150 may be disposed as a layer shape at the outer circumferential surface of the rotor 160.

Preferably, a thickness t1 between an outer circumferential surface of the stator 110 and each exciter slot 112 and 112' is relatively greater than a thickness t2 between the outer circumferential surface of the stator 110 and the stator slot 111, in order to compensate an area of the stator 110 corresponding an area decreased upon forming the exciter slots 112 and 112' by considering a magnetic saturation of the stator 110.

A part (i.e., referred to as a pole shoe) 113a of an end portion of each teeth 113 adjacent to each exciter slot 112 and 112' among the plurality of teeth 113 is preferably removed therefrom.

A taper portion 114a is preferably formed at an end of each exciter pole 114 and 114'.

The main coil 120 and the sub coil 130 are wound in the plurality of stator slots 111 according to a particular winding method. Here, the sub coil 130 is wound in each stator slot 111 adjacent to each exciter slot 112 and 112' among the plurality of stator slots by being overlapped thereon.

As shown in Figs. 6 and 7, considering a winding structure of the main coil 120, the main coil 120 is inserted into a 1^{st} stator slot, and wound sequentially via a 12^{th} stator slot, a 2^{nd} stator slot, a 11^{th} stator slot, a 3^{rd} stator slot, a 10^{th} stator slot, a 4^{th} stator slot, a 9^{th} stator slot, a 24^{th} stator slot, a 13^{th} stator slot, a 23^{rd} stator slot, a 14^{th} stator slot, a 22^{nd} stator slot, a 15^{th} stator slot, a 21^{st} stator slot, and a 16^{th} stator slot, to be then drawn out.

As shown in Figs. 6 and 8, the sub coil 130 is inserted into a 5^{th} stator slot, and wound sequentially via a 20^{th} stator slot, the 5^{th} stator slot, the 20^{th} stator slot, a 4^{th} stator slot, a 21^{st} stator slot, a 3^{rd} stator slot, a 22^{nd} stator slot, a 8^{th} stator slot, a 17^{th} stator slot, the 8^{th} stator slot, the 17^{th} stator slot, a 9^{th} stator slot, a 16^{th} stator slot, a 10^{th} stator slot, and a 15^{th} stator slot, to be then drawn out. Accordingly, the sub coil 130 is wound in the 17^{th}, 20^{th}, 5^{th}, and 8^{th} stator slots by being overlapped thereon.

Hereinafter, a method for winding coils on a stator of a self magnetizing motor according to the present invention will be explained.

A method for winding coils on a stator of a self magnetizing motor is related to winding the main and sub coils 120 and 130 on a stator of a single-phase two-pole 24-slot type motor, wherein the sub coil 130 is wound in each stator slot adjacent to each exciter slot among a plurality of stator slots by being overlapped thereon.

As shown in Figs. 6 and 7, the main coil 120 is inserted into a 1^{st} stator slot, and wound sequentially via a 12^{th} stator slot, a 2^{nd} stator slot, a 11^{th} stator slot, a 3^{rd} stator slot, a 10^{th} stator slot, a 4^{th} stator slot, a 9^{th} stator slot, a 24^{th} stator slot, a 13^{th} stator slot, a 23^{rd} stator slot, a 14^{th} stator slot, a 22^{nd} stator slot, a 15^{th} stator slot, a 21^{st} stator slot, and a 16^{th} stator slot, to be then drawn out.

As shown in Figs. 6 and 8, the sub coil 130 is inserted into a 5^{th} stator slot, and wound sequentially via a 20^{th} stator slot, the 5^{th} stator slot, the 20^{th} stator slot, a 4^{th} stator slot, a 21^{st} stator slot, a 3^{rd} stator slot, a 22^{nd} stator slot, a 8^{th} stator slot, a 17^{th} stator slot, the 8^{th} stator slot, the 17^{th} stator slot, a 9^{th} stator slot, a 16^{th} stator slot, a 10^{th} stator slot, and a 15^{th} stator slot, to be then drawn out. Here, the sub coil 130 is wound in the 17^{th}, 20^{th}, 5^{th}, and 8^{th} stator slots by being overlapped thereon. Accordingly, a magnetomotive force can sinuously distributed and accordingly a vibration of the motor can be minimized, thereby effectively preventing noise caused by the vibration.

In the rotor 110 of the self magnetizing motor 100 according to the present invention having such construction, when an external AC power is applied to the main coil 120 and the sub coil 130 wound the stator slots 111 at the initial driving, respectively, the sub coil 130 having a current phase going 90° ahead as compared to that of the main coil 120, a rotating magnetic field is generated in the stator 110.

At this time, an induced current is applied to the conductive bar 161 of the rotor 160 by the rotating magnetic field of the stator 110, and the rotor 160 then starts to rotate by the induced current. Here, the rotor 160 rotates by being slipped after the initial driving. At this time, the current applied to the sub coil 130 is shielded by a current cut-off device, and the current may only be applied to the main coil 120.

While the rotor 160 rotates, an effect that the exciter magnetizable portion 150 disposed at the outer circumferential surface of the rotor 160 is magnetized with a low density by the rotating magnetic field of the stator 110, namely, a hysteresis effect, is generated. As a result, the rotor 160 can rotate based upon an induction torque generated by the induced current and a hysteresis torque generated by the hysteresis effect.

When the rotor 160 rotates and thus its rotating speed is 2,520 to 2,880 rpm which corresponds to about 70 to 80% of the synchronous speed, upon applying the AC power to the exciter coils 140 and 140', a magnetic flux generated by the exciter coils 140 and 140' is delivered to the exciter magnetizable portion 150, so that the exciter magnetizable portion 150 can be magnetized with a high density.

The pole shoe 113a of the end portion of each teeth 113 adjacent to each exciter slot 112 and 112' among the plurality of teeths 113 is removed therefrom, and the taper portion 114a is formed at the end of each exciter pole 114 and 114'. Accordingly, the magnetic flux generated by the exciter coils 140 and 140' is not leaked to thus effectively improve a magnetizing efficiency of the exciter magnetizable portion 150.

Also, the exciter magnetizable portion 150 is magnetized by the two exciter poles 114 and 114', and thus a higher magnetization rate can be realized.

As aforementioned, as the exciter magnetizable portion 150 is magnetized with the high density, the rotor 160 can rotate with the synchronous speed of the rotating magnetic field without being slipped. At this time, the induced current may not be applied to the conductive bar 161.

In addition, the main coil 120 and the sub coil 130 are wound in the plurality of stator slots according to the particular winding method. Here, the sub coil 130 is wound in each stator slot 111 adjacent to each exciter slot 112 and 112' among the plurality of stator slots by being overlapped thereon. Accordingly, a magnetomotive force can be sinuously distributed and accordingly a vibration of the motor can be minimized, thereby effectively preventing noise caused by the vibration.

As described above, in the present invention, the self magnetizing motor can be operated by the induced electromotive force generated by the main coil, the sub coil and the conductive bar of the rotor from its initial driving to a speed prior to the synchronous speed, and operated by the magnetomotive force generated by the exciter poles and the exciter magnetizable portion at the synchronous speed. Also, two exciter poles are disposed to face each other to thus increase the magnetization rate of the exciter magnetizable portion. Accordingly, the rotor can easily rotate with the synchronous speed of the magnetic field without being slipped, thereby effectively preventing noise caused by a vibration.

## Claims

1. A self magnetizing motor (100) comprising:
a stator (110) provided with a plurality of stator slots (111), and exciter slots (112,112') along an inner circumferential surface of the stator (110) with a constant internal therebetween, teeths (113) respectively positioned between each stator slot (111), and exciter poles (114,114') respectively positioned between each exciter slot (112,112');
a main coil (120) wound in predetermined stator slots (111);
a sub coil (130) having a current phase going 90° ahead as compared with that of the main coil (120) and wound in predetermined stator slots (111);
an exciter coil (140) wound in each exciter slot (112,112') and
a rotor (160) rotatably inserted in a center portion of the stator (110), and having an exciter magnetizable portion (150) disposed at an outer circumferential surface thereof to be magnetized by the exciter coil (140).
wherein a thickness (t1) between the outer circumferential surface of the stator (110) and an exciter slot (112,112') is relatively greater than a thickness (t2) between the outer circumferential surface of the stator and a stator slot (111)

2. The self magnetizing motor of claim 1, wherein the exciter poles (114,114') are positioned to face each other on the basis of the center portion of the stator.

3. The self magnetizing motor of claim 1 or 2, wherein the exciter coils (140,140') wound in each exciter slot are wound thereon in opposite directions to each other.

4. The self magnetizing motor of claim 1 or 2, wherein the exciter magnetizable portion (150) has a cylindrical structure.

5. The self magnetizing motor of claim 1 or 2, wherein the sub coil (130) is wound at least twice in each stator slot (5,8,17,20) closest to each exciter slot (112,112') among the plurality of stator slots.

6. The self magnetizing motor of claim 5, wherein the main coil (120) is inserted into a 1^{st} stator slot, and wound sequentially via a 12^{th} stator slot, a 2^{nd} stator slot, a 11^{th} stator slot, a 3^{rd} stator slot, a 10^{th} stator slot, a 4^{th} stator slot, a 9^{th} stator slot, a 24^{th} stator slot, a 13^{th} stator slot, a 23^{rd} stator slot, a 14^{th} stator slot, a 22^{nd} stator slot, a 15^{th} stator slot, a 21^{st} stator slot, and a 16^{th} stator slot, to be then drawn out, and
the sub coil (130) is inserted into a 5^{th} stator slot, and wound sequentially via a 20^{th} stator slot, the 5^{th} stator slot, the 20^{th} stator slot, a 4^{th} stator slot, a 21^{st} stator slot, a 3^{rd} stator slot, a 22^{nd} stator slot, a 8^{th} stator slot, a 17^{th} stator slot, the 8^{th} stator slot, the 17^{th} stator slot, a 9^{th} stator slot, a 16^{th} stator slot, a 10^{th} stator slot, and a 15^{th} stator slot, to be then drawn out, the sub coil (130) being repeatedly wound in the 17^{th}, 20^{th}, 5^{th}, and 8^{th} stator slots, to be then drawn out.

7. The self magnetizing motor of claim 1 or 2, wherein the stator (110) is constructed as a plurality of sheets are stacked together.

8. The self magnetizing motor of claim 1 or 2, wherein a part (113a) of an end portion of each tooth (113) adjacent to each exciter slot (112,112') among the plurality of teeth is removed therefrom.

9. The self magnetizing motor of claim 1 or 2, wherein a taper portion (114a) is formed at an end of the exciter pole (114,114').

## Patentansprüche

1. Selbstmagnetisierender Motor (100), der aufweist:
einen Stator (110), der mit mehreren Statorschlitzen (111) und Erregerschlitzen (112,112') längs einer Innenumfangsfläche des Stators (110) mit einem konstanten Abstand dazwischen, Zähnen (113), die zwischen jeweils zwei Statorschlitzen (111) angeordnet sind, und Erregerpolen (114,114') versehen ist, die zwischen jeweils zwei Erregerschlitzen (112,112') angeordnet sind;
eine Hauptwicklung (120), die in vorgegebene Statorschlitze (111) gewickelt ist;
eine Hilfswicklung (130), die eine Stromphase aufweist, die im Vergleich zu jener der Hauptwicklung (120) um 90° vorläuft, und in vorgegebene Statorschlitze (111) gewickelt ist;
eine Erregerwicklung (140), die in jeden Erregerschlitz (112,112') gewickelt ist; und
einen Rotor (160), der drehbar in einen Mittenabschnitt des Stators (110) eingefügt ist und einen magnetisierbaren Erregerabschnitt (150) aufweist, der an einer Außenumfangsfläche davon angeordnet ist, so dass er durch die Erregerwicklung (140) magnetisiert wird;
wobei eine Dicke (t1) zwischen der Außenumfangsfläche des Stators (110) und einem Erregerschlitz (112,112') verhältnismäßig größer als eine Dicke (t2) zwischen der Außenumfangsfläche des Stators und einem Statorschlitz (111) ist.

2. Selbstmagnetisierender Motor nach Anspruch 1, wobei die Erregerpole (114,114') so angeordnet sind, dass sie hinsichtlich des Mittenabschnitts des Stators einander gegenüberliegen.

3. Selbstmagnetisierender Motor nach Anspruch 1 oder 2, wobei die in jeden Erregerschlitz gewickelten Erregerwicklungen (140,140') darauf in zueinander entgegen gesetzte Richtungen gewickelt sind.

4. Selbstmagnetisierender Motor nach Anspruch 1 oder 2, wobei der magnetisierbare Erregerabschnitt (150) einen zylindrischen Aufbau aufweist.

5. Selbstmagnetisierender Motor nach Anspruch 1 oder 2, wobei die Hilfswicklung (130) in jedem Statorschlitz (5,8,17,20) nahe zu jedem Erregerschlitz (112,112') zwischen den mehreren Statorschlitzen mindestens zweifach gewickelt ist.

6. Selbstmagnetisierender Motor nach Anspruch 5, wobei die Hauptwicklung (120) in einen 1. Statorschlitz eingefügt ist und nacheinander über einen 12. Statorschlitz, einen 2. Statorschlitz, einen 11. Statorschlitz, einen 3. Statorschlitz, einen 10. Statorschlitz, einen 4. Statorschlitz, einen 9. Statorschlitz, einen 24. Statorschlitz, einen 13. Statorschlitz, einen 23. Statorschlitz, einen 14. Statorschlitz, einen 22. Statorschlitz, einen 15. Statorschlitz, einen 21. Statorschlitz und einen 16. Statorschlitz gewickelt ist, um dann herausgezogen zu werden, und
die Hilfswicklung (130) in einen 5. Statorschlitz eingefügt ist und nacheinander über einen 20. Statorschlitz, den 5. Statorschlitz, den 20. Statorschlitz, einen 4. Statorschlitz, einen 21. Statorschlitz, einen 3. Statorschlitz, einen 22. Statorschlitz, einen 8. Statorschlitz, einen 17. Statorschlitz, den 8. Statorschlitz, den 17. Statorschlitz, einen 9. Statorschlitz, einen 16. Statorschlitz, einen 10. Statorschlitz und einen 15. Statorschlitz gewickelt ist, um dann herausgezogen zu werden, wobei dabei die Hilfswicklung (130) wiederholt in den 17., 20., 5. und 8. Statorschlitz gewickelt ist, um dann herausgezogen zu werden.

7. Selbstmagnetisierender Motor nach Anspruch 1 oder 2, wobei der Stator (110) aus mehreren aufeinander geschichteten Blechen aufgebaut ist.

8. Selbstmagnetisierender Motor nach Anspruch 1 oder 2, wobei ein Teil (113a) eines Endabschnitts jedes Zahns (113) benachbart zu jedem Erregerschlitz (112,112') zwischen den mehreren Zähnen daraus entfernt ist.

9. Selbstmagnetisierender Motor nach Anspruch 1 oder 2, wobei ein verjüngter Abschnitt (114a) an einem Ende des Erregerpols (114,114') ausgebildet ist.

## Revendications

1. Moteur à automagnétisation (100), comprenant :
un stator (110) prévu avec une pluralité de fentes de stator (111) et de fentes d'excitation (112, 112') réparties sur une surface périphérique intérieure du stator (110) avec un espacement constant entre elles, des dents (113) disposées respectivement entre deux fentes de stator (111) et des pôles d'excitation (114, 114') disposés respectivement entre deux fentes d'excitation (112, 112,') ;
une bobine principale (120) enroulée dans des fentes de stator (111) définies ;
une bobine secondaire (130) présentant une phase de courant en avance de 90° par rapport à celle de la bobine principale (120) et enroulée dans des fentes de stator (111) définies ;
une bobine d'excitation (140) enroulée dans chaque fente d'excitation (112, 112') ; et
un rotor (160) logé de manière à être libre en rotation dans une partie centrale du stator (110) et présentant une partie d'excitation magnétisable (150) disposée sur une surface périphérique extérieure et magnétisée par la bobine d'excitation (140) ;
où une épaisseur (t1) entre la surface périphérique extérieure du stator (110) et une fente d'excitation (112, 112') est relativement supérieure à une épaisseur (t2) entre la surface périphérique extérieure du stator et une fente de stator (111).

2. Moteur à automagnétisation selon la revendication 1, où les pôles d'excitation (114, 114') sont disposés de manière à être opposés l'un à l'autre par rapport à la partie centrale du stator.

3. Moteur à automagnétisation selon la revendication 1 ou la revendication 2, où les bobines d'excitation (140, 140') enroulées dans chaque fente d'excitation sont enroulées dans des directions opposées l'une à l'autre.

4. Moteur à automagnétisation selon la revendication 1 ou la revendication 2, où la partie d'excitation magnétisable (150) présente une structure cylindrique.

5. Moteur à automagnétisation selon la revendication 1 ou la revendication 2, où la bobine secondaire (130) est enroulée au moins deux fois dans chaque fente de stator (5, 8, 17, 20) voisine de chaque fente d'excitation (112, 112') parmi la pluralité de fentes de stator.

6. Moteur à automagnétisation selon la revendication 5, où la bobine principale (120) est insérée dans une 1^{e} fente de stator, et enroulée séquentiellement en passant par une 12^{e} fente de stator, une 2^{e} fente de stator, une 11^{e} fente de stator, une 3^{e} fente de stator, une 10^{e} fente de stator, une 4^{e} fente de stator, une 9^{e} fente de stator, une 24^{e} fente de stator, une 13^{e} fente de stator, une 23^{e} fente de stator, une 14^{e} fente de stator, une 22^{e} fente de stator, une 15^{e} fente de stator, une 21^{e} fente de stator, et une 16^{e} fente de stator avant d'être ressortie, et où la bobine secondaire (130) est insérée dans une 5^{e} fente de stator, et enroulée séquentiellement en passant par une 20^{e} fente de stator, la 5^{e} fente de stator, la 20^{e} fente de stator, une 4^{e} fente de stator, une 21^{e} fente de stator, une 3^{e} fente de stator, une 22^{e} fente de stator, une 8^{e} fente de stator, une 17^{e} fente de stator, la 8^{e} fente de stator, la 17^{e} fente de stator, une 9^{e} fente de stator, une 16^{e} fente de stator, une 10^{e} fente de stator, et une 15^{e} fente de stator avant d'être ressortie, où la bobine secondaire (130) est en l'occurrence enroulée de manière répétée dans les 17^{e}, 20^{e}, 5^{e} et 8^{e} fentes de stator avant d'être ressortie.

7. Moteur à automagnétisation selon la revendication 1 ou la revendication 2, où le stator (110) est construit par empilement d'une pluralité de tôles.

8. Moteur à automagnétisation selon la revendication 1 ou la revendication 2, où une partie (113a) d'une zone d'extrémité de chaque dent (113) adjacente à chaque fente d'excitation (112, 112') parmi la pluralité de dents est évidée de celle-ci.

9. Moteur à automagnétisation selon la revendication 1 ou la revendication 2, où une partie chanfreinée (114a) est formée à une extrémité du pôle d'excitation (114, 114').
